Europäisches Patentamt

**European Patent Office**

Office européen des brevets

(11) Numéro de publication: **0 049 912**
A2

(12) **DEMANDE DE BREVET EUROPEEN**

(21) Numéro de dépôt: **81200657.5**

(51) Int. Cl.³: **B 65 G 53/46**

(22) Date de dépôt: **12.06.81**

(30) Priorité: **10.10.80 LU 82837**

(43) Date de publication de la demande:
**21.04.82 Bulletin 82/16**

(84) Etats contractants désignés:
**AT BE DE FR GB IT NL SE**

(71) Demandeur: **PAUL WURTH S.A.**
**32 rue d'Alsace**
**L-1122 Luxembourg(LU)**

(72) Inventeur: **Ulveling, Léon**
**rue Dr Jos Peffer**
**Howald(LU)**

(74) Mandataire: **Meyers, Ernest et al,**
**Office de Brevets Freylinger & Associés 46 rue du**
**Cimetière B.P. 1153**
**L-1011 Luxembourg(LU)**

(54) **Procédé et dispositif de formation d'un courant pneumatique uniforme de matières pulvérulentes.**

(57) La matière pulvérulente est admise dans un jet d'air de propulsion sous pression, à l'aide d'un sas à rotor alvéolaire.

Pour éviter des pulsations dans les conduites et pour assurer une vidange totale des alvéoles du sas, celui-ci est monté immédiatement au-dessus d'une chambre de mélange (6) de manière que les alvéoles (4) du rotor pénètrent, lors de la rotation de celui-ci, au moment de la libération de la matière pulvérulente, dans ladite chambre (6), tandis que la conduite d'admission (12) du fluide de propulsion est dirigé sur les alvéoles (4) du rotor lors du passage de celles-ci dans cette chambre (6).

Fig. 2

0049912

<u>Procédé et dispositif de formation d'un courant pneuma-</u>
<u>tique uniforme de matières pulvérulentes</u>

La présente invention concerne un procédé de formation d'un courant pneumatique uniforme de matières pulvérulentes qui sont dosées au moyen d'un sas à rotor alvéolaire
et ensuite introduites dans un fluide de propulsion pneumatique. L'invention concerne également un dispositif pour la
mise en oeuvre de ce procédé.

Les sas à rotor alvéolaire sont bien connus dans
le domaine du transport pneumatique de matières pulvérulentes et sont, jusqu'à présent, utilisés de deux manières différentes pour la formation du courant pneumatique. Dans un
premier mode, comme par exemple, mentionné dans la demande
de brevet européen 80103206, le sas à rotor alvéolaire remplit deux fonctions, à savoir le dosage des matières pulvérulentes et l'admission de celles-ci dans un courant d'air
de propulsion pneumatique. A cet effet, l'air de propulsion
traverse le rotor au niveau des alvéoles de celui-ci, parallèlement à l'axe de rotation et entraîne la matière, horizontalement hors du sas, au fur et à mesure qu'elle est débitée par les alvéoles. L'inconvénient de ce mode de fonctionnement est que la matière pulvérulente est entraînée
par paquets, correspondant au volume d'une alvéole, et le
transport pneumatique se fait de manière pulsatoire. Ce
problème est discuté en détail dans la demande de brevet
luxembourgeois 82 624.

Pour remédier à l'apparition de ces pulsations
dans les conduites de transport pneumatique, cette demande
de brevet luxembourgeois propose un autre mode opératoire
pour les sas à rotor alvéolaire. Dans ce mode, on a séparé
les fonctions de dosage et de formation du courant pneumatique. En effet, alors que le dosage est toujours réalisé
par l'action des alvéoles du sas, l'admission de la matière
pulvérulente débitée par ces alvéoles, est réalisée dans une
enceinte se trouvant sous le sas et dans lequel le fluide
de propulsion est introduit en lui imposant un mouvement
tourbillonnaire. Ce mouvement tourbillonnaire du fluide de
propulsion à l'intérieur de cette enceinte provoque un mélange intense avec la matière pulvérulente débitée par le sas à rotor alvéolaire et le fluide de propulsion quittant cette enceinte entraîne les particules de manière progressive et uniforme.

Toutefois, ce dernier mode de fonctionnement a soulevé un nouveau problème inexistant lorsque le sas fonctionne selon la demande de brevet européen. Il s'agit, en l'occurence, de la vidange des alvéoles du rotor. En effet, par suite d'une légère compression dans les alvéoles lors de la rotation, compression pouvant être favorisée par une augmentation du degré d'humidité, il peut arriver que la matière pulvérulente ne tombe pas hors des alvéoles et fasse tout le tour avec le rotor. Or, si une alvéole n'est pas vidée de cette manière, elle restera bouchée, étant donné que son contenu subira, lors de la rotation du rotor, des tassements successifs qui le compriment davantage et empêcheront son dégagement par la seule voie de la gravité. Il peut arriver que plusieurs alvéoles tombent ainsi en panne et entraînent la défaillance totale du système. Le seul remède à cette panne est le démontage du sas et le dégagement des alvéoles bouchées.

Le but de la présente invention est de prévoir un nouveau procédé de formation d'un courant pneumatique uniforme de matières pulvérulentes qui présente les avantages de l'un et de l'autre des systèmes connus décrits ci-dessus, sans souffrir de leurs inconvénients. Un but accessoire est un dispositif pour la mise en oeuvre de ce procédé.

Pour atteindre cet objectif, le procédé selon l'invention est essentiellement caractérisé en ce que le mélange entre les particules pulvérulentes et le fluide de propulsion est réalisé dans une chambre de mélange dans laquelle pénètrent les alvéoles rotatives du sas au moment de la libération des matières pulvérulentes et en ce que le fluide pneumatique est introduit dans cette chambre sous forme d'un jet dirigé sur les alvéoles du rotor.

La direction du jet de fluide de propulsion est, de préférence, dans le sens de la longueur des alvéoles.

Selon une autre caractéristique, le jet est dirigé

- 3 -

0049912

sur les alvéoles quittant la chambre de mélange.

Ce procédé de formation du courant pneumatique évite la formation de pulsations, étant donné que, comme dans la demande de brevet luxembourgeois 82 624, le mélange uniforme entre le fluide pneumatique et la matière pulvérulente est effectué dans la chambre de mélange.

Ce procédé évite également l'obstruction des alvéoles du rotor grâce au fait que le jet de fluide pneumatique est dirigé sur celles-ci. En effet, si une alvéole ne se vidait pas sous la seule influence de la gravité, le jet de fluide sous pression auquel elle est exposée au moment de quitter la chambre, assurerait certainement l'évacuation des matières pulvérulentes qui y restent encore.

Ce procédé présente encore un avantage supplémentaire par rapport au procédé connu décrit ci-dessus en référence à la demande de brevet européen 80103206. Le procédé selon l'invention permet en effet une meilleure charge du courant pneumatique, c'est-à-dire un rapport plus élevé de quantités de matières pulvérulentes par unité de fluide de propulsion. En effet, dans le procédé connu, la matière pulvérulente est extraite horizontalement du sas à rotor alvéolaire, c'est-à-dire qu'elle doit être accélérée de la vitesse zéro jusqu'à la vitesse de transport pneumatique. Or, pour assurer cette accélération de la matière pulvérulente, il faut une quantité supplémentaire de fluide de propulsion. En revanche, dans le procédé proposé par l'invention, la matière pulvérulente est mise en mouvement automatiquement par gravité lors de la chute des alvéoles du rotor dans la chambre de mélange.

Le dispositif pour la mise en oeuvre de ce procédé est caractérisé en ce que le sas à rotor alvéolaire est monté immédiatement au-dessus de la chambre de mélange de manière que les alvéoles du rotor pénètrent, lors de la rotation de celui-ci, au moment de la libération de la matière pulvérulente, dans ladite chambre et en ce que la conduite d'admission du fluide de propulsion est dirigée sur les alvéoles du rotor lors du passage dans cette chambre.

Il est également possible de créer dans cette chambre de mélange l'effet tourbillonnaire proposé par la demande de brevet luxembourgeois 82 624. Pour cela, il suffit de décaler l'axe vertical du sas légèrement par rapport à l'axe vertical de la chambre de mélange pour que le jet du fluide, tout en étant dirigé à travers les alvéoles parallèlement à l'axe de rotation de celle-ci, soit tangentiel à une paroi de la chambre de mélange ou, du moins, ne soit pas perpendiculaire à la paroi de celle-ci. Cette chambre de mélange aura, bien entendu, une forme cylindrique avec une partie convergente en direction de la sortie.

En outre, il est possible d'incliner légèrement les palettes définissant les alvéoles de façon que celles-ci aient une disposition hélicoïdale autour du rotor. Cette disposition imprime automatiquement un effet giratoire sur le jet du fluide de propulsion balayant ces alvéoles.

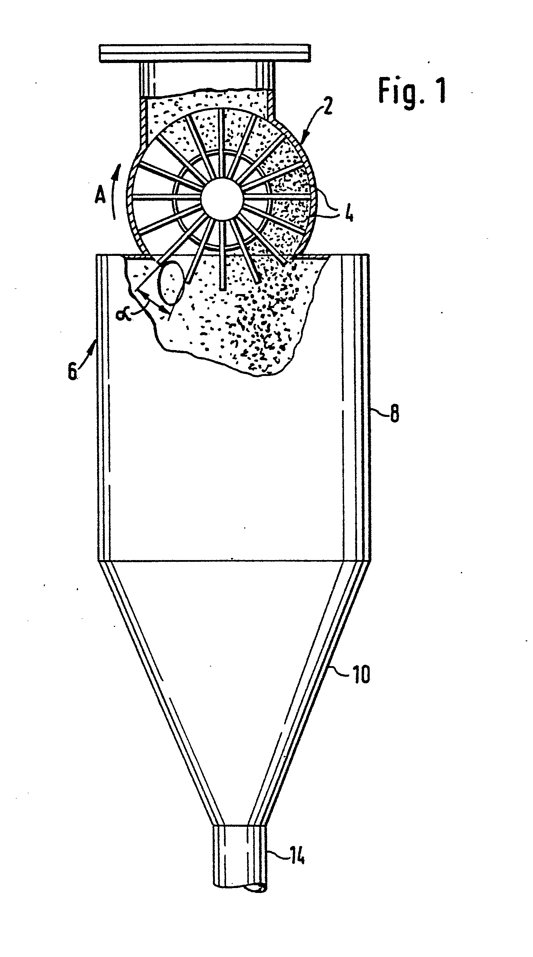

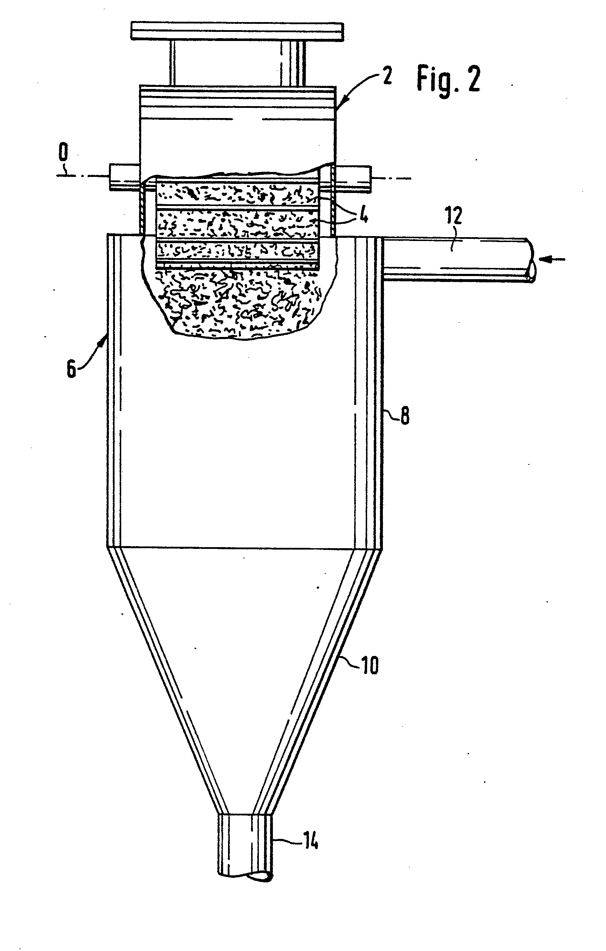

D'autres particularités et caractéristiques ressortiront de la description détaillée d'un mode de réalisation présenté ci-dessous, à titre d'illustration, en référence aux figures 1 et 2 montrant schématiquement des vues partiellement en coupe d'un dispositif selon l'invention, ces vues étant suivant deux directions perpendiculaires.

Le sas à rotor alvéolaire montré sur ces figures 1 et 2, est désigné globalement par la référence 2. Ce sas 2 comporte essentiellement un rotor tournant autour d'un axe O et pourvu à sa périphérie d'une série de palettes définissant entre elles des alvéoles 4. Au fur et à mesure de la rotation de ce rotor, les alvéoles 4 se remplissent par le dessus et débitent leur contenu vers le bas.

Conformément à l'invention, le sas 2 est monté immédiatement au-dessus d'une chambre 6 de façon que les alvéoles 4 pénètrent dans celle-ci au moment de la libération de leur contenu par chute libre dans la chambre. Cette chambre 6, dans laquelle s'effectue le mélange de la matière pulvérulente débitée par les alvéoles avec un fluide de propulsion pneumatique, est constituée par une cuve cylindrique 8, prolongée vers le bas par une section tronconique 10 à partir de laquelle une conduite pneumatique 14 quitte la chambre 6 pour entraîner la matière pulvérulente.

La figure 2 montre une conduite 12 d'admission

0049912

d'un fluide de propulsion pneumatique, par exemple de l'air, dans la chambre de mélange 6. Conformément à la présente invention, cette conduite 12 est dirigée de manière que le jet du fluide sous pression traverse les alvéoles 4 du rotor. Le jet est, de préférence, dirigé sur les alvéoles au moment où celles-ci quittent la chambre 6, c'est-à-dire sur le secteur désigné par $\alpha$ sur la figure 1 lorsque le rotor tourne dans le sens de la flèche A. Si une alvéole 4 ne s'est pas vidée complètement par gravité lorsqu'elle pénètre dans la chambre 6, elle sera certainement vidée sous l'influence du jet pneumatique au moment où elle quitte la chambre 6 dans le secteur $\alpha$.

Se référant plus particulièrement à la figure 1, il est possible de disposer le sas 2 plus à gauche ou plus à droite par rapport à l'axe vertical de la chambre 6 afin de provoquer un tourbillon prédétermine à l'intérieur de la chambre 6 par l'action de la forme de la paroi de celle-ci sur le jet du fluide pneumatique.

Le système proposé par l'invention a une répercussion avantageuse sur la conception même du sas à rotor alvéolaire. En effet, lorsque le sas a la double fonction de doser la matière pulvérulente et d'en assurer l'admission dans le fluide pneumatique, on est limité pour la conception des alvéoles en ce sens que leur grandeur et leur forme doivent être conçues en fonction de la conduite pneumatique, notamment en fonction du diamètre de celles-ci. En revanche, lorsque le sas est utilisé dans un dispositif tel que proposé ci-dessus, on peut augmenter le nombre des alvéoles, c'est-à-dire diminuer leur volume et prévoir la forme la plus efficace pour que le sas à rotor alvéolaire puisse remplir dans des conditions optimales les fonctions qu'on lui demande. La forme des alvéoles pourra notamment être conçue de manière à contribuer à une vidange parfaite, aussi bien sous l'action de la gravité que sous l'action du soufflage.

- 6 -

## REVENDICATIONS

1. - Procédé de formation d'un courant pneumatique uniforme de matières pulvérulentes qui sont dosées au moyen d'un sas à rotor alvéolaire et ensuite introduites dans un fluide de propulsion pneumatique, caractérisé en ce que le mélange entre les particules pulvérulentes et le fluide de propulsion est réalisé dans une chambre de mélange dans laquelle pénètrent les alvéoles rotatives du sas au moment de la libération des matières pulvérulentes et en ce que le fluide pneumatique est introduit dans cette chambre sous forme d'un jet dirigé sur les alvéoles du rotor.

2. - Procédé selon la revendication 1, caractérisé en ce que la direction du jet de fluide de propulsion est dans le sens de la longueur des alvéoles.

3. - Procédé selon les revendications 1 ou 2, caractérisé en ce que le jet est dirigé sur les alvéoles quittant la chambre de mélange.

4. - Dispositif pour la mise en oeuvre du procédé selon l'une quelconque des revendications 1 à 3, comprenant un sas à rotor alvéolaire (2) destiné à débiter des quantités dosées de matières pulvérulentes et une chambre de mélange (6) pour la formation du courant pneumatique, cette chambre (6) étant pourvue d'une conduite d'admission (12) d'un fluide de propulsion, caractérisé en ce que le sas à rotor alvéolaire (2) est monté immédiatement au-dessus de la chambre de mélange (6) de manière que les alvéoles (4) du rotor pénètrent, lors de la rotation de celui-ci, au moment de la libération de la matière pulvérulente, dans ladite chambre (6) et en ce que la conduite d'admission (12) du fluide de propulsion est dirigé sur les alvéoles (4) du rotor lors du passage de celles-ci dans cette chambre (6).

5. - Dispositif selon la revendication 4, caractérisé en ce que la cuve de mélange 6 comporte une partie cylindrique (8) et une partie tronconique 10, qui converge vers une conduite de sortie (14).

0049912

Fig. 1

0049912

Fig. 2